# EUROPEAN PATENT APPLICATION

(11) **EP 4 274 178 A1**
(43) Date of publication of application: **08.11.2023**
(21) Application number: 21918298.7
(22) Date of filing: 13.01.2021
(51) Int. Cl.: H04L 43/00

(54) **NODE DETERMINATION METHOD AND APPARATUS FOR DISTRIBUTED TASK, AND DEVICE AND MEDIUM**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN); SHEN, Jia, Dongguan, Guangdong 523860 (CN)
(74) Representative: Ipside
(86) International application number: PCT/CN2021/071570
(87) International publication number: WO 2022/151083

(57) **Abstract**

The present application relates to the field of mobile communications. Disclosed are a node determination method and apparatus, and a device and a medium. The method comprises: a child node in a mobile communication system sending available resource information to a master node; the master node receiving the available resource information sent by the child node in the mobile communication system; and determining, on the basis of available resource information of a plurality of child nodes, a target child node participating in a distributed task, wherein the available resource information comprises at least one of the following information: computing capability information, storage capability information, transmission capability information, and energy capability information.

## Description

### TECHNICAL FIELD

The present disclosure relates to the field of mobile communication, in particular to a node determination method for a distributed task, an apparatus, a device, and a medium.

### BACKGROUND

Initial research on a neural network is constructed mostly based on an assumption of single machine training and reasoning. In recent years, researchers began to gradually focus on a distributed task.

A training process of the distributed task involves multiple nodes participating in training of a model, and includes collection of a data set and weight adjustment, etc.

In a process of the distributed task, how to determine a node participating in the distributed task is a technical problem that needs to be solved urgently.

### SUMMARY

Embodiment of the present disclosure provides a node determination method for a distributed task, an apparatus, a device, and a medium, such that a master node can determine a node participating in a distributed task from a plurality of sub-nodes based on available resource information.

According to an aspect of the present disclosure, a node determination method is provided, and is performed in a sub-node in a plurality of nodes of a mobile communication system. The method includes:
transmitting, by the sub-node, available resource information to a master node of the mobile communication system, the available resource information being configured to determine target sub-nodes participating in the distributed task.

According to an aspect of the present disclosure, a node determination method is provided, and is performed in a master node in a plurality of nodes of a mobile communication system. The method includes:
receiving, by the master node, available resource information transmitted by a sub-node of a mobile communication system;
determining, by the master node, target sub-nodes participating in the distributed task based on the available resource information of the sub-node.

According to an aspect of the present disclosure, a node determination apparatus for a distributed task is provided and includes:
a transmission module, configured to transmit available resource information to a master node of a mobile communication system, the available resource information being configured to determine a target sub-node participating in the distributed task.

According to an aspect of the present disclosure, a node determination apparatus for a distributed task is provided and includes:
a receiving module, configured to receive available resource information transmitted by a sub-node of a mobile communication system;
a processing module, configured to determine a target sub-node participating in the distributed task based on the available resource information of the sub-node.

According to an aspect of the present disclosure, a network device is provided and includes:
a processor; a transceiver connected to the processor; and a memory configured to store executable instructions of the processor; the processor is configured to load and execute the executable instructions to implement any one of the node determination methods mentioned above.

According to an aspect of the present disclosure, a computer-readable storage medium is provided, the computer-readable storage medium stores executable instructions loaded and executed by a processor to implement any one of the node determination methods mentioned above.

According to an aspect of the present disclosure, a computer program product or computer program is provided. The computer program product or computer program includes computer instructions, which are stored in a computer-readable storage medium. A processor of a computer device reads the computer instructions from the computer-readable storage medium, and executes the computer instructions, so that the computer device performs any one of the node determination methods mentioned above.

According to an aspect of the present disclosure, a chip is provided, includes a programmable logic circuit and/or program instructions and configured to implement any one of the node determination methods mentioned above.

The technical solution provided by embodiments of the present disclosure at least includes following technical effects:
by reporting the available resource information from the sub-nodes to the master node, the master node determines a set of target sub-nodes participating in the distributed task based on the available resource information of a plurality of sub-nodes. Thus, according to the requirements of the distributed task, the master node can select a set of the best node or better nods for the training and reasoning of the distributed neural network from a plurality of nodes capable of participating in the distributed task. In this way, the plurality of better sub-nodes are configured to improve computing efficiency of the distributed task as a whole.

### BRIEF DESCRIPTION OF THE DRAWINGS

In order to make the technical solution described in embodiments of the present disclosure more clearly, the drawings used for description of embodiments are described. Apparently, the drawings in the following description are only some embodiments of the present disclosure. For those skilled in the art, other drawings may be acquired according to the drawings without any creative work.
FIG. 1 is a schematic diagram of a federated learning scenario according to exemplary embodiments of the present disclosure.
FIG. 2 is a schematic diagram of a mobile communication system according to exemplary embodiments of the present disclosure.
FIG. 3 is a flowchart of a node determination method according to exemplary embodiments of the present disclosure.
FIG. 4 is a flowchart of a node determination method according to exemplary embodiments of the present disclosure.
FIG. 5 is a flowchart of a node determination method according to exemplary embodiments of the present disclosure.
FIG. 6 is a block diagram of a node determination apparatus according to exemplary embodiments of the present disclosure.
FIG. 7 is a block diagram of a node determination apparatus according to exemplary embodiments of the present disclosure.
FIG. 8 is a block diagram of a communication device according to exemplary embodiments of the present disclosure.

### DETAILED DESCRIPTION

In order to make the purpose, technical solution, and technical effect of the present disclosure clearly, embodiments of the present disclosure are further described in detail below in combination with the drawings.

Before introducing the methods provided by embodiments of the present disclosure in detail, related terms and implementation environment involved in embodiments of the present disclosure are briefly introduced.

A distributed task involves a task in which a plurality of nodes participate. The distributed task includes, but are not limited to, at least one of following tasks: a distributed data collection task, a distributed data computing task, a distributed data storage task, a distributed stream data processing task, a distributed model training task, a distributed model reasoning task, a distributed machine learning task, and a federated learning task.

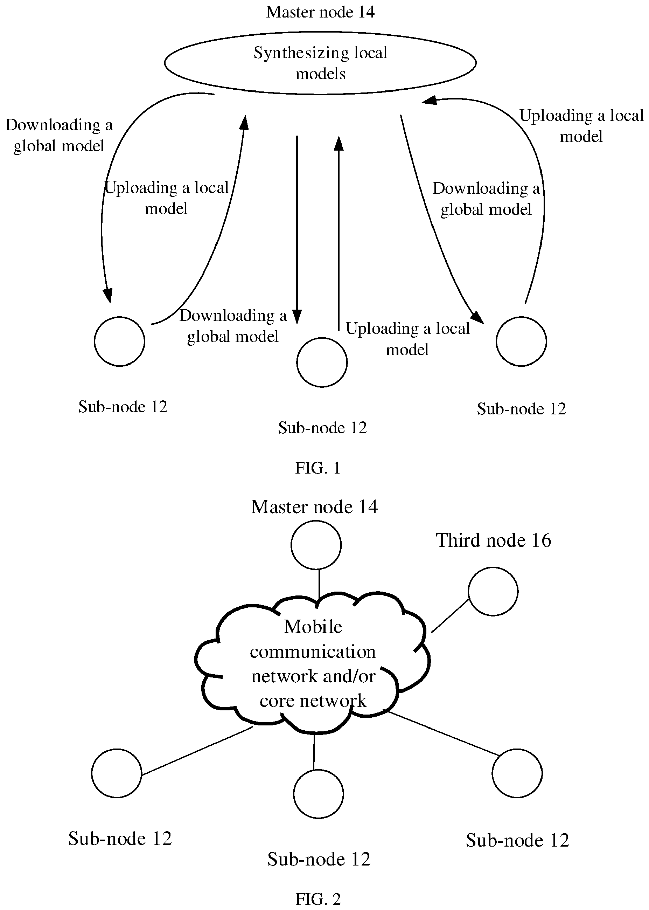

The federated learning task is a typical distributed task scheme. As shown in FIG. 1, in a training process of the federated learning task, a training set is distributed on each sub-node 12. First, each sub-node 12 trains to obtain a local neural network based on a training set in the local, and uploads the local neural network to a master node 14. The master node 14 synthesizes the obtained local neural networks to obtain a global neural network, and transmits the global neural network to each sub-node 12. Each sub-node 12 continues to use the new global neural network for a next training iteration. Finally, training of the neural network is completed under cooperation of the plurality of sub-nodes.

FIG 2 is a schematic diagram of a mobile communication system according to exemplary embodiments of the present disclosure. The system includes a plurality of sub-nodes 12, a master node 14, and a third node 16. The third node 16 is an optional node.

The sub-nodes 12 are nodes configured to participate in the distributed task. A sub-node 12 is a user equipment (UE), an access network device, a core network element, or other network device in the mobile communication system. For example, the access network device includes a base station, and the core network element includes at least one of a user plane function (UPF), unified data management (UDM), a network exposure function (NEF), an access and mobility management function (AMF) entity, a session management function (SMF), and a policy control function (PCF).

The master node 14 is a node configured for task allocation, task distribution and participating in the distributed task. The master node 14 is a UE in the mobile communication system, an access network device, a core network element, or other network device in the mobile communication system. For example, the access network device includes a base station, and the core network element includes at least one of a UPF, UDM, a NEF, an AMF entity, a SMF, and a PCF. The master node 14 may be an independent network node in the mobile communication system, a particular sub-node of the sub-nodes 12 participating in the distributed task, or a control node participating in the distributed task.

The third node 16 is a node different from the sub-nodes 12 and the master node 14 in the mobile communication system.

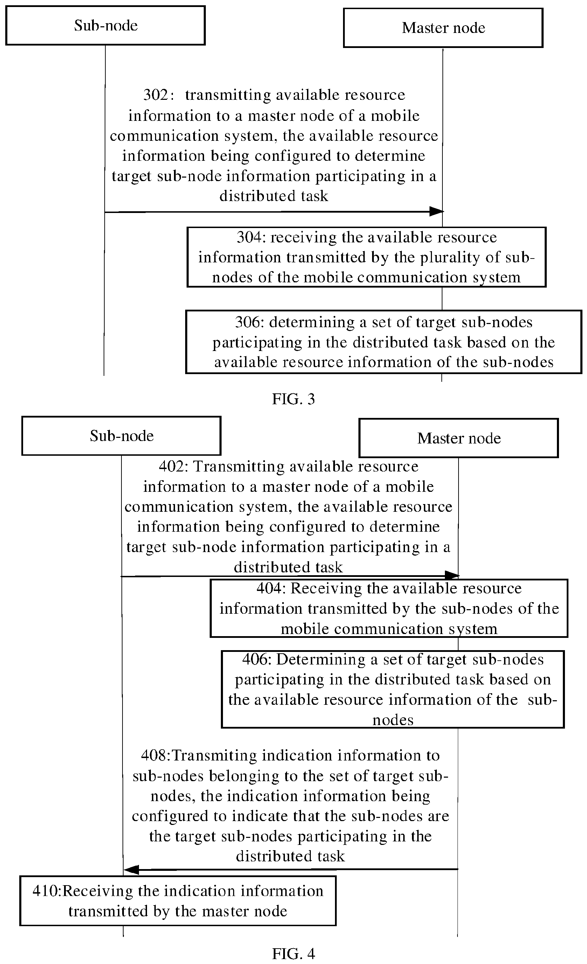

FIG 3 is a flowchart of a node determination method according to exemplary embodiments of the present disclosure. The method may be performed in a master node and a respective sub-node in a plurality of nodes of the mobile communication system, and the method includes following operations.

At operation 302, the respective sub-node transmits available resource information to a master node of a mobile communication system, and the available resource information is configured to determine a target sub-node information participating in a distributed task.

There are many types of devices that may be configured as sub-nodes, and computing capability, storage capability, transmission capability and energy capability of different devices are very different. The respective sub-node reports its own available resource information to the master node. The available resource information includes at least one of:
- computing capability information;
   the computing capability information is configured to indicate information related to computing capability in the sub-node. The computing capability information is configured to characterize at least one capability of fixed-point computing, floating-point computing, and computing cache.
- storage capability information;
   the storage capability information is configured to indicate information related to storage capability in the sub-node. The storage capability information is configured to characterize at least one of capability of an available memory, an available cache, and an available storage.
- transmission capability information;
   the transmission capability information is configured to indicate information related data transmission capability in the sub-node. The transmission capability information is configured to characterize at least one capability of a rate, a delay, a signal strength, a bit error rate, and a block error rate.
- energy capability information;
   the energy capability information is configured to indicate information related to power capability in the sub-nodes. The energy capability information is configured to characterize at least one of capability of remaining power, available power, and an endurance prediction.

In some embodiments, the sub-node periodically report the available resource information to the master node. In some embodiments, the master node sends a report indication to the sub-node, and the sub-node report the available resource information to the master node after receiving the report indication.

At operation 304, the master node receives the available resource information transmitted by the sub-node of the mobile communication system.

At operation 306, the master node determines a set of target sub-nodes participating in the distributed task based on the available resource information of the sub-node.

Based on the available resource information of the plurality of sub-nodes, the master node selects sub-nodes with better available resources from the plurality of sub-nodes as the target sub-nodes participating in the distributed task, and adds them to the set of target sub-nodes.

In the method provided in embodiments of the present disclosure, by reporting the available resource information from the sub-nodes to the master node, the master node determines a set of target sub-nodes participating in the distributed task based on the available resource information of a plurality of sub-nodes. Thus, according to the requirements of the distributed task, the master node can select a set of the best node or better nodes for training and reasoning of the distributed neural network. In this way, the plurality of better sub-nodes are configured to improve computing efficiency of the distributed task as a whole.

In embodiments of the present disclosure, the available resource information includes at least one of following four types of information.

### (1) Computing capability information

The computing capability information includes at least one of:
floating-point computing capability per unit of time;
the number of graphics processing units (GPUs);
a cache capacity of GPUs;
the number of neural network processing units (NPUs);
a cache capacity of NPUs; and
the number of central processing units (CPUs).

In some embodiments, the computing capability information may be characterized by one or more of the floating-point computing capability per unit of time, the number of GPUs, and the cache capacity of GPUs, etc.

In some embodiments, the computing capability information may be characterized by computing capability level information. For example, different computing capability levels characterize different floating-point computing capabilities per unit of time, different numbers of GPUs, different cache capacities of the GPUs, different processing capabilities of NPUs, different cache capacities of CPUs, the number of CPUs, or a combination of one or more of the above.

For example, different cache capacities of GPUs may correspond to four different types of computing capability level information, as shown in Table 1.

**Table 1**

| Computing capability level | | cache capacity of GPUs | |
|---|---|---|---|
| | 1 | | 4G |
| | 2 | | 8G |
| | 3 | | 16G |
| | 4 | | 32G |

For another example, different cache capacities of CPUs and different numbers of CPUs may correspond to four different types of computing capability level information, as shown in Table 2.

**Table 2**

| Computing capability level | | CPU | The Number of CPUs | |
|---|---|---|---|---|
| | 1 | 4G | | 1 |
| | 2 | 4G | | 2 |
| | 2 | 8G | | 1 |
| | 3 | 8G | | 2 |
| | 3 | 16G | | 1 |
| | 4 | 16G | | 2 |
| | 4 | 32G | | 1 |

A corresponding relationship between the computing capability level information and one or more of the floating-point computing capability per unit of time, the number of GPUs, the cache capacity of GPUs, the processing capability of NPUs, the number of CPUs, the cache capacity of CPUs is pre-agreed in a protocol, or configured by the master node to the sub-nodes, or configured by the third node to the sub-nodes.

For example, the master node or the third node is a network device, and the sub-node is a UE. The network device transmits the corresponding relationship to the UE through one or more transmission modes of a broadcast message, a system information block (SIB), a radio resource control (RRC) message, a RRC reconfiguration signaling, downlink control information (DCI), a medium access control-control element (MAC-CE), a physical downlink control channel (PDCCH) order, and data information, etc.

It may be understood that a SIB is a possible implementation form of a broadcast message, and a RRC reconfiguration signaling is a possible implementation form of a RRC message. That is, a first indication signaling includes at least one of a broadcast message, RRC message, DCI, a MAC-CE, a PDCCH order, data information. A broadcast message includes a SIB, and a RRC message includes a RRC reconfiguration signaling.

### (2) Storage capability information

The storage capability information includes at least one of:
an available memory capacity;
an available cache capacity; and
an available storage capacity.

In some embodiments, the storage capability information may be characterized by one or more of the available memory capacity, the available cache capacity, and the available storage capacity, etc. "available" in embodiments of the present disclosure refers to "available for the distributed task".

In some embodiments, the storage capability information may be characterized by storage capability level information, and different storage capability level information characterizes different available memory capacities, different available cache capacities, or different available storage capacities.

For example, different memory capacities may correspond to four different types of computing capability level information, as shown in Table 3.

**Table 3**

| Computing capability level | | Memory capacity | |
|---|---|---|---|
| | 1 | | 128G |
| | 2 | | 256G |
| | 3 | | 512G |
| | 4 | | 1024G |

A corresponding relationship between the storage capability level information and one or more of the memory capacity, the cache capacity, and the storage capacity is pre-agreed in a protocol, or is configured by the master node to the sub-nodes, or is configured by the third node to the sub-nodes.

For example, the master node or the third node is a network device, and the sub-node is a UE. The network device transmits the corresponding relationship to the UE through one or more transmission modes of broadcast, a SIB, a RRC message, a MAC-CE, a PDCCH, and DCI, etc.

### (3) Transmission capability information

Transmission capability information includes at least one of:
a transmission rate;
a transmission delay;
a communication signal strength, such as: reference signal received power (RSRP), reference signal received quality (RSRQ), or signal-to-interference-and-noise ratio (SINR);
channel quality state information;
a transmission bit error rate;
a transmission information block error rate; and
spectrum efficiency information.

The transmission capability information may be characterized by one or more of supported information including the transmission rate, the transmission delay, the communication signal strength, the channel quality state information, the transmission bit error rate, the transmission information block error rate, and the spectrum efficiency information, etc.

The transmission capability may be characterized by transmission capability level information. Different transmission capability level information characterizes different transmission rates, transmission delays, and communication signal strengths, characterizes different channel quality state information, characterizes different transmission bit error rates, characterizes different transmission information block error rates, or characterizes different spectral efficiency.

A corresponding relationship between the transmission capability level information and one or more of the transmission rate, the transmission delay, the communication signal strength, the channel quality state information, the transmission bit error rate, transmission block bit error rate, and spectrum efficiency information, etc. is pre-agreed in a protocol, or configured by the master node to the sub-nodes, or configured by the third node to the sub-nodes.

For example, the master node or the third node is a network device, and the sub-node is a UE. The network device transmits the corresponding relationship to the UE through one or more of broadcasting, a SIB, a RRC message, a MAC-CE, a PDCCH, and DCI, etc.

### (4) Energy capability information

The energy capability information includes at least one of:
residual power;
available power for the distributed task; and
a predicted value of endurance.

In some embodiments, the energy capability information may be characterized by one or more of the residual power of the sub-node, the available power of the sub-node for the distributed task, and the predicted value of endurance, etc.

In some embodiments, energy capability may be characterized by energy capability level information. Different energy capability level information characterizes different residual powers, different available power information for the distributed task, or different predicted values of endurance.

A corresponding relationship between the energy capability level information and the electricity information is pre-agreed in a protocol, or configured by the master node to the sub-nodes, or configured by the third node to the sub-nodes.

For example, the master node or the third node is a network device, and the sub-nodes are UE. The network device transmits the corresponding relationship to the UE through one or more of broadcasting, a SIB, a RRC message, a MAC-CE, a PDCCH, and DCI, etc.

FIG 4 is a flowchart of a node determination method according to exemplary embodiments of the present disclosure. The method may be performed in a master node and a respective sub-node in a plurality of nodes of a mobile communication system, and the method includes following operations.

At operation 402, a sub-node transmits available resource information to a master node of a mobile communication system, and the available resource information is configured to determine target sub-node information participating in a distributed task.

There are many types of devices that may be configured as sub-nodes, and computing capability, storage capability, transmission capability and energy capability of different devices are very different. The respective sub-node reports its own available resource information to the master node. The available resource information includes at least one of:
computing capability information;
storage capability information;
transmission capability information; and
energy capability information.

In some embodiments, the sub-node periodically report the available resource information to the master node. In some embodiments, the master node sends a report indication to the sub-node, and the sub-node report the available resource information to the master node after receiving the report indication.

Since the available resource information has many types, in some embodiments, the available resource information has at least two types carried in a same type of signaling, and/or the available resource information has at least two types carried in different types of signaling.

The sub-node may independently feedback any of the computing capability information, the storage capability information, the transmission capability information and the energy capability information to the third node. The sub-node may also simultaneously feedback at least two of the computing capability information, the storage capability information, transmission capability information and energy capability information to the third node.

Optionally, a way in which the sub-node feedbacks the above information may be represented by a way for feeding back capability level information, which includes feeding back many types of the computing capability information, the storage capability information, the transmission capability information, and energy capability information. An example is shown in Table 4.

**Table 4**

| Sub-node capability level | Computing capability level | Storage capability level | Transmission capability level | Energy consumption capability level |
|---|---|---|---|---|
| 1 | 1 | 1 | 1 | 1 |
| 2 | 2 | 2 | 2 | 2 |
| 3 | 3 | 3 | 3 | 3 |
| 4 | 3 | 3 | 4 | 4 |
| 5 | 4 | 4 | 1 | 1 |
| 6 | 4 | 4 | 2 | 2 |
| 7 | 4 | 4 | 3 | 3 |
| 8 | 4 | 4 | 4 | 4 |

It should be noted that the tables in the present disclosure are illustrative and do not limit specific form of the available resource information.

For example, when the sub-node is a UE and the master node is an access network device, the available resource information is carried in at least one of a RRC message, UCI, information carried in PUCCH, and information carried in PUSCH. When the sub-node is a access network device and the master node is a UE, the available resource information is carried in at least one of system information, a SIB, a RRC message, a MAC-CE, DCI, information carried in PDCCH, and information carried in PDSCH.

In some embodiments, there is at least one available resource information characterized by data, and the sub-nodes transmit the available resource information in form of data to the master node. In some embodiments, there is at least one available resource information characterized by a capability level, and the sub-node transmit available resource information in form of capability level to the master node.

For example, the sub-node determines the capability level corresponding to the available resource information according to corresponding relationship information. The corresponding relationship information includes a corresponding relationship between available resource information with different values and different capability levels. The sub-node transmits the capability levels corresponding to the available resource information to the master node.

For example, the available resource information includes the computing capability information. The sub-node determines a computing capability level corresponding to the computing capability information according to corresponding relationship information. The corresponding relationship information includes a corresponding relationship between computing capability information with different values and different computing capability levels. The sub-node transmits the computing capability levels to the master node.

For example, the available resource information includes the storage capability information. The sub-node determines a storage capability level corresponding to the storage capability information according to corresponding relationship information. The corresponding relationship information includes a corresponding relationship between storage capability information with different values and different storage capability levels. The sub-nodes transmit the storage capability levels to the master node.

For example, the available resource information includes the transmission capability information. The sub-node determines a transmission capability level corresponding to the transmission capability information according to corresponding relationship information. The corresponding relationship information includes a corresponding relationship between transmission capability information with different values and different transmission capability levels. The sub-nodes transmit the transmission capability levels to the master node.

For example, the available resource information includes the energy capability information. The sub-node determines an energy capability level corresponding to the energy capability information according to corresponding relationship information. The corresponding relationship information includes a corresponding relationship between energy capability information with different values and different energy capability levels. The sub-nodes transmit the energy capability levels to the master node.

In some embodiments, the corresponding relationship information is predefined in a communication protocol. In some embodiments, the corresponding relationship information is pre-configured by the master node to the sub-nodes. In some embodiments, the corresponding relationship information is pre-configured by the third node to the sub-nodes. The third node is a node of the mobile communication system that is different from the master node and the sub-nodes.

At operation 404, the master node receives the available resource information transmitted by the sub-node of the mobile communication system.

For example, when the sub-node is a UE, and the master node is an access network device, the master node receives the available resource information transmitted by the sub-nodes in at least one of a RRC message, UCI, information carried in PUCCH, and information carried in PUSCH. When the sub-node is an access network device and the master node is a UE, the available resource information is carried in at least one of the following signaling to receive the available resource information transmitted by the sub-node: system information, a SIB, a RRC message, a MAC-CE, DCI, information carried in PDCCH, and information carried in PDSCH.

At operation 406, the master node determines a target sub-node participating in the distributed task based on the available resource information of the sub-node.

Based on the available resource information of the plurality of sub-nodes, the master node selects sub-nodes with better available resources from the plurality of sub-nodes as the target sub-nodes participating in the distributed task, and adds them to a set of target sub-nodes.

In some embodiments, the available resource information includes the computing capability information. Based on the computing capability information of the plurality of sub-nodes, the master node selects n sub-nodes with best computing capability from the plurality of sub-nodes as the target sub-nodes participating in the distributed task, and adds them to the set of target sub-nodes. The n is a positive integer, and the n is the number of sub-nodes required by the distributed task.

In some embodiments, the available resource information includes the storage capability information. Based on the storage capability information of the plurality of sub-nodes, the master node selects n sub-nodes with best storage capability from the plurality of sub-nodes as the target sub-nodes participating in the distributed task, and adds them to the set of target sub-nodes.

In some embodiments, the available resource information includes the transmission capability information. Based on the transmission capability information of the plurality of sub-nodes, the master node selects n sub-nodes with best transmission capability from the plurality of sub-nodes as the target sub-nodes participating in the distributed task, and adds them to the set of target sub-nodes.

In some embodiments, the available resource information includes the energy capability information. Based on the energy capability information of the plurality of sub-nodes, the master node selects n sub-nodes with best energy capability from the plurality of sub-nodes as the target sub-nodes participating in the distributed task, and adds them to the set of target sub-nodes.

In some embodiments, the available resource information includes at least two types of information. Each type of available resource information is converted into a score according to actual data. The available resource information of each sub-node may be converted into a total score. The master node selects n sub-nodes with best total score from the plurality of sub-nodes as the target sub-nodes participating in the distributed task, and add to them the set of target sub-nodes.

In case where the distributed task has a preference for resource capability, the master node sets a corresponding weight for each type of available resource information when calculating a score of each type of available resource information. For example, when the distributed task has a high demand for floating-point computing capability, the master node sets a high weight for floating-point computing capability. For another example, when the distributed task has a high demand for power, the master node sets a high weight for available power.

In some embodiments, the master node sets a set of participation threshold conditions based on the available resource information, and selects a plurality of candidate sub-nodes whose available resource information meets the set of participation threshold conditions from the plurality of sub-nodes. The master node randomly determines n sub-nodes from the plurality of candidate sub-nodes as target sub-nodes participating in the distributed task, or determines n sub-nodes with the earliest sending time from the plurality of candidate sub-nodes as the target sub-nodes participating in the distributed task, and added them to the set of target sub-nodes.

At operation 408, the master node transmits indication information to a sub-node belonging to the set of target sub-nodes, and the indication information is configured to indicate that the sub-node is a target sub-node participating in the distributed task.

For example, when the sub-node is a UE and the master node is an access network device, the master node transmits the indication information in at least one of system information, a SIB, a RRC message, a MAC-CE, DCI, information carried in PDCCH, and information carried in PDSCH. When the sub-node is an access network device and the master node is a UE, the master node transmits the indication information in at least one of a RRC message, UCI, information carried in PUCCH, and information carried in PUSCH.

At operation 410, the sub-node receives the indication information transmitted by the master node.

For example, when the sub-node is a UE and the master node is an access network device, the sub-node receives indication information in at least one of system information, a SIB, a RRC message, a MAC-CE, DCI, information carried in PDCCH, and information carried in PDSCH. When the sub-node is an access network device and the master node is a UE, the sub-node receives indication information in at least one of a RRC message, UCI, information carried in PUCCH, and information carried in PUSCH.

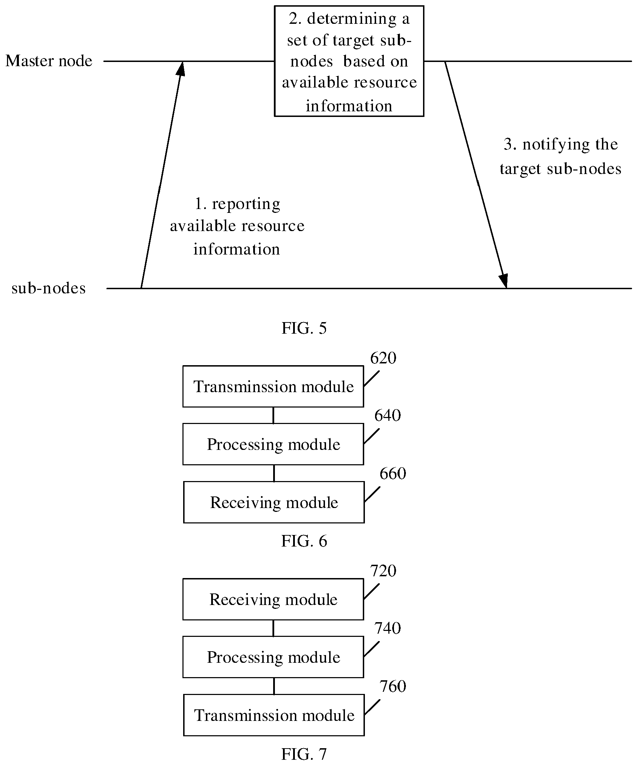

With reference to FIG. 5, a whole process may be simply summarized as follows: 1. a plurality of sub-nodes report available resource information to a master node; 2. the master node determines a set of target sub-nodes based on the available resource information; 3. the master node notifies the target sub-nodes so that the target sub-nodes may participate in the distributed task.

In subsequent processes, the master node transmits the distributed task to the target sub-nodes, and the target sub-nodes complete collection, computing, training and/or reasoning of the distributed task.

The distributed task includes but are not limited to at least one of a distributed data collection task, a distributed data computing task, a distributed data storage task, a distributed stream data processing task, a distributed model training task, a distributed model reasoning task, a distributed machine learning task, and a federated learning task. For example, the distributed task is the federated learning.

In one possible example, the distributed task is a machine learning task related to at least one of coding, decoding, modulation, demodulation, transmission scheduling, transmission feedback, channel information feedback, and system broadcast of the mobile communication system.

In the method provided in embodiments of the present disclosure, by reporting the available resource information from the sub-nodes to the master node, the master node determines a set of target sub-nodes participating in the distributed task based on the available resource information of a plurality of sub-nodes. Thus, according to the requirements of the distributed task, the master node can select a set of the best node or better nods for the training and reasoning of the distributed neural network from a plurality of nodes capable of participating in the distributed task. In this way, the plurality of better sub-nodes are configured to improve computing efficiency of the distributed task as a whole.

FIG. 6 is a block diagram of a node determination apparatus according to exemplary embodiments of the present disclosure. The apparatus includes a transmission module 620, configured to transmit available resource information to a master node of a mobile communication system, and the available resource information is configured to determine a target sub-node participating in a distributed task.

In an optional design of embodiments of the present disclosure, the available resource information includes at least one of computing capability information, storage capability information, transmission capability information, and energy capability information.

In an optional design of embodiments of the present disclosure, the computing capability information includes at least one of floating-point computing capability per unit of time, the number of GPUs, a cache capacity of GPUs, the number of NPUs, a cache capacity of NPUs, and the number of CPUs.

In an optional design of embodiments of the present disclosure, the storage capability information includes at least one of an available memory capacity, an available cache capacity, and an available storage capacity.

In an optional design of embodiments of the present disclosure, the transmission capability information includes at least one of a transmission rate, a transmission delay, a communication signal strength, channel quality state information, a transmission bit error rate, a transmission information block error rate, and spectrum efficiency information.

In an optional design of embodiments of the present disclosure, the energy capability information includes at least one of residual power, available power for the distributed task, and a predicted value of endurance.

In an optional design of embodiments of the present disclosure, the apparatus also includes a processing module 640, configured to determine capability levels corresponding to the available resource information according to corresponding relationship information. The corresponding relationship information includes: a corresponding relationship between different available resource information and different capability levels.

The transmission module is configured to transmit the capability levels corresponding to the available resource information to the master node.

In an optional design of embodiments of the present disclosure, the processing module 640 is configured to:
determine computing capability levels corresponding to the computing capability information according to first corresponding relationship information, in response to the available resource information including the computing capability information, the first corresponding relationship information includes a corresponding relationship between different computing capability information and different computing capability levels;
determine storage capability levels corresponding to the storage capability information according to second corresponding relationship information, in response to the available resource information including the storage capability information, the second corresponding relationship information includes a corresponding relationship between different storage capability information and different storage capability levels;
determine transmission capability levels corresponding to the transmission capability information according to third corresponding relationship information, in response to the available resource information including the transmission capability information, the third corresponding relationship information includes a corresponding relationship between different transmission capability information and different transmission capability levels;
determine energy capability levels corresponding to the energy capability information according to fourth corresponding relationship information, in response to the available resource information including the energy capability information, the fourth corresponding relationship information includes a corresponding relationship between different energy capability information and different energy capability levels.

In an optional design of embodiments of the present disclosure, the corresponding relationship information is predefined in a communication protocol, or the corresponding relationship information is configured by the master node, or the corresponding relationship information is configured by a third node. The third node is a node of the mobile communication system that is different from the master node and the sub-nodes.

In an optional design of embodiments of the present disclosure, the available resource information has at least two types carried in a same type of signaling, and/or the available resource information has at least two types carried in different types of signaling.

In an optional design of embodiments of the present disclosure, the available resource information is carried in at least one of a RRC message, UCI, information carried in PUCCH, and information carried in PUSCH. Or the available resource information is carried in at least one of system information, a SIB, a RRC message, a MAC-CE, DCI, information carried in PDCCH, and information carried in PDSCH.

In an optional design of embodiments of the present disclosure, the device may include a receiving module 660, configured to receive an indication information transmitted by the master node. The indication information is configured to indicate that the sub-node is a target sub-node participating in the distributed task.

FIG. 7 is a block diagram of a node determination apparatus according to exemplary embodiments of the present disclosure. The apparatus includes:
a receiving module 720, configured to receive available resource information transmitted by sub-nodes of a mobile communication system; and
a processing module 740, configured to determine target sub-nodes participating in the distributed task based on the available resource information of a plurality of sub-nodes.

In an optional design of embodiments of the present disclosure, the available resource information includes at least one of computing capability information, storage capability information, transmission capability information, and energy capability information.

In an optional design of embodiments of the present disclosure, the computing capability information includes at least one of floating-point computing capability per unit of time, the number of GPUs, a cache capacity of GPUs, the number of NPUs, a cache capacity of NPUs, and the number of CPUs.

In an optional design of embodiments of the present disclosure, the storage capability information includes at least one of an available memory capacity, an available cache capacity, and an available storage capacity.

In an optional design of embodiments of the present disclosure, the transmission capability information includes at least one of a transmission rate, a transmission delay, a communication signal strength, channel quality state information, a transmission bit error rate, a transmission information block error rate, and spectrum efficiency information.

In an optional design of embodiments of the present disclosure, the energy capability information includes at least one of residual power, available power for the distributed task, and a predicted value of endurance.

In an optional design of embodiments of the present disclosure, the apparatus may also include a transmission module 760, configured to configure corresponding relationship information to the sub-nodes, and the corresponding relationship information includes a corresponding relationship between different available resource information and different capability levels.

In an optional design of embodiments of the present disclosure, the corresponding relationship information includes at least one of:
first corresponding relationship information, including a corresponding relationship between different computing capability information and different computing capability levels;
second corresponding relationship information, including a corresponding relationship between different storage capability information and different storage capability levels;
third corresponding relationship information, including a corresponding relationship between different transmission capability information and different transmission capability levels; and
fourth corresponding relationship information, including a corresponding relationship between different energy capability information and different energy capability levels.

In an optional design of embodiments of the present disclosure, the available resource information has at least two types carried in a same type of signaling, and/or the available resource information has at least two types carried in different types of signaling.

In an optional design of embodiments of the present disclosure, the available resource information is carried in at least one of a RRC message, UCI, information carried in PUCCH, and information carried in PUSCH.

Or the available resource information is carried in at least one of system information, a SIB, a RRC message, a MAC-CE, DCI, information carried in PDCCH, and information carried in PDSCH.

In an optional design of embodiments of the present disclosure, the apparatus may also include the transmission module 760, configured to transmit indication information to the sub-nodes, and the indication information is configured to indicate that the sub-nodes are target sub-nodes participating in the distributed task.

The sub-nodes mentioned in above embodiments may include various devices with wireless communication functions, such as a handheld device, an on-board device, a wearable device, a computing device, other processing device connected to wireless modems, various forms of user devices, a mobile station (MS), or an unmanned aerial vehicle device, etc. For convenience of description, the device mentioned above are collectively referred to as terminal devices.

The sub-node mentioned in above embodiments may also be a base station which is device deployed in the access network to provide wireless communication functions for terminal devices. The base stations may include various forms, such as a macro base station, a micro base station, a relay station, and an access point, etc. In systems with different wireless access technologies, names of devices with functions of a base station may be different. For example, the base station is called as evolutional node B (eNodeB) or eNB in a long term evolution (LTE) system, and called as gNodeB or gNB in a New Radio (NR) system. With development of communication technologies, a definition of the "base station" may change. For convenience of description, the devices that provide wireless communication functions for terminals are collectively referred to as network devices.

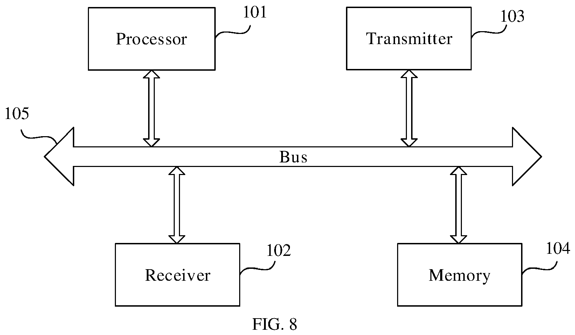

FIG. 8 is a block diagram of a communication device (a terminal device or a network device) according to exemplary embodiments of the present disclosure. The communication device includes a processor 101, a receiver 102, a transmitter 103, a memory 104, and a bus 105.

The processor 101 includes one or more processing cores. The processor 101 performs various functional applications and information processing by running software programs and modules.

The receiver 102 and the transmitter 103 may be implemented as a communication component, which may be a communication chip.

The memory 104 is connected to the processor 101 through the bus 105.

The memory 104 may be configured to store at least one instruction, and the processor 101 may be configured to perform the at least one instruction to implement various operations of the node determination method for a distributed task in above method embodiments.

The operations performed by the transmission module in FIG 6 or FIG 7 may be performed by the transmitter 103 in this embodiment. The operations performed by the receiving module in FIG 6 or FIG 7 may be performed by the receiver 104 in this embodiment. Operations except for the operation performed by the transmitting module and the receiving module in FIG 6 or FIG 7 may be performed by the processor 101 in this embodiment.

In addition, the memory 104 may be any type of volatile, non-volatile storage device or their combination. Volatile or non-volatile storage devices include but are not limited to: a disk, an optical disk, an electrically erasable programmable read-only memory (EEPROM), an erasable programmable read-only memory (EPROM), a static ready access memory (SRAM), a read-only memory (ROM), a magnetic memory, a flash memory, a programmable read only memory (PROM).

In an exemplary embodiment, a computer-readable storage medium is also provided. The computer-readable storage medium stores at least one instruction, at least one program, code set or instruction set loaded and executed by a processor to implement the node determination method of the distributed task performed by the communication device in the above method embodiments.

In an exemplary embodiment, a computer program product or computer program is also provided. The computer program product or computer program includes computer instructions, which are stored in a computer-readable storage medium. A processor of a computer device reads the computer instructions from the computer-readable storage medium, and executes the computer instructions, so that the computer device performs the node determination method of the distributed task in the above method embodiments.

Those skilled may understand that, all or some of the operations implementing the above embodiments may be performed by a hardware, or may be performed by indicating a relevant hardware through a program. The program may be stored in a computer-readable storage medium, which may be a read-only memory, a disk, or an optical disk.

Above description are only alternative embodiments of the present disclosure, but does not limit the present disclosure. Any modification, equivalent replacement, and improvement, etc. within spirit and principle of the present disclosure should be included in the protection scope of the present disclosure.

## Claims

1. A node determination method for a distributed task, performed in a sub-node in a plurality of nodes of a mobile communication system, comprising:
transmitting, by the sub-node, available resource information to a master node of the mobile communication system, the available resource information being configured to determine a target sub-node participating in the distributed task.

2. The method as claimed in claim 1, wherein the available resource information comprises at least one of:
computing capability information;
storage capability information;
transmission capability information; and
energy capability information.

3. The method as claimed in claim 2, wherein the computing capability information comprises at least one of:
floating-point computing capability per unit of time;
the number of graphics processing units (GPUs);
a cache capacity of the GPUs;
the number of neural network processing units (NPUs);
a cache capacity of the NPUs; and
the number of central processing units (CPUs).

4. The method as claimed in claim 2, wherein the storage capability information comprises at least one of:
an available memory capacity;
an available cache capacity; and
an available storage capacity.

5. The method as claimed in claim 2, wherein the transmission capability information comprises at least one of:
a transmission rate;
a transmission delay;
a communication signal strength;
channel quality state information;
a transmission bit error rate;
a transmission information block error rate; and
spectrum efficiency information.

6. The method as claimed in claim 2, wherein the energy capability information comprises at least one of:
residual power;
available power for the distributed task; and
a predicted value of endurance.

7. The method as claimed in any one of claims 1 to 6, wherein the transmitting, by the sub-nodes, available resource information to a master node, comprises:
determining, by the sub-node, a capability level corresponding to the available resource information according to corresponding relationship information, the corresponding relationship information comprising a corresponding relationship between different available resource information and different capability levels;
transmitting, by the sub-node, the capability level corresponding to the available resource information to the master node.

8. The method as claimed in claim 7, wherein the determining, by the sub-node, a capability level corresponding to the available resource information according to corresponding relationship information, comprises:
determining a computing capability level corresponding to the computing capability information according to first corresponding relationship information, in response to the available resource information comprising the computing capability information, the first corresponding relationship information comprising a corresponding relationship between different computing capability information and different computing capability levels;
determining a storage capability level corresponding to the storage capability information according to second corresponding relationship information, in response to the available resource information comprising the storage capability information, the second corresponding relationship information comprising a corresponding relationship between different storage capability information and different storage capability levels;
determining a transmission capability level corresponding to the transmission capability information according to third corresponding relationship information, in response to the available resource information comprising the transmission capability information, the third corresponding relationship information comprising a corresponding relationship between different transmission capability information and different transmission capability levels; and
determining an energy capability level corresponding to the energy capability information according to fourth corresponding relationship information, in response to the available resource information comprising the energy capability information, the fourth corresponding relationship information comprising a corresponding relationship between different energy capability information and different energy capability levels.

9. The method as claimed in claim 7, wherein the corresponding relationship information is predefined in a communication protocol; or
the corresponding relationship information is configured by the master node; or
the corresponding relationship information is configured by a third node, the third node being a node of the mobile communication system that is different from the master node and the sub-node.

10. The method as claimed in any one of claims 2 to 6, wherein the available resource information has at least two types carried in a same type of signaling; and/or
the available resource information has at least two types carried in different types of signaling.

11. The method as claimed in any one of claims 1 to 6, wherein the available resource information is carried in at least one of:
a radio resource control (RRC) message, uplink control information (UCI), information carried in a physical uplink control channel (PUCCH), and information carried in a physical uplink shared channel (PUSCH); or
system information, a system information block (SIB), a RRC message, a medium access control-control element (MAC-CE), downlink control information (DCI), information carried in a physical downlink control channel (PDCCH), and information carried in a physical downlink shared channel (PDCCH).

12. The method as claimed in any one of claims 1 to 6, further comprising:
receiving, by the sub-node, indication information transmitted by the master node, the indication information being configured to indicate that the sub-node is the target sub-node participating in the distributed task.

13. A node determination method for a distributed task, performed in a master node in a plurality of nodes of a mobile communication system, comprising:
receiving, by the master node, available resource information transmitted by a sub-node of the mobile communication system;
determining, by the master node, a target sub-node participating in the distributed task based on the available resource information of the sub-node.

14. The method as claimed in claim 13, wherein the available resource information comprises at least one of:
computing capability information;
storage capability information;
transmission capability information; and
energy capability information.

15. The method as claimed in claim 14, wherein the computing capability information comprises at least one of:
floating-point computing capability per unit of time;
the number of graphics processing units (GPUs);
a cache capacity of GPUs;
the number of neural network processing units (NPUs);
a cache capacity of NPUs; and
the number of central processing units (CPUs).

16. The method as claimed in claim 14, wherein the storage capability information comprises at least one of:
an available memory capacity;
an available cache capacity; and
an available storage capacity.

17. The method as claimed in claim 14, wherein the transmission capability information comprises at least one of:
a transmission rate;
a transmission delay;
a communication signal strength;
channel quality state information;
a transmission bit error rate;
a transmission information block error rate; and
spectrum efficiency information.

18. The method as claimed in claim 14, wherein the energy capability information comprises at least one of:
residual power;
available power for the distributed task; and
a predicted value of endurance.

19. The method as claimed in any one of claims 13 to 18, further comprising:
configuring, by the master node, corresponding relationship information to the sub-node, the corresponding relationship information comprising a corresponding relationship between different available resource information and different capability levels.

20. The method as claimed in claim 19, wherein the corresponding relationship information comprises at least one of:
first corresponding relationship information, comprising a corresponding relationship between different computing capability information and different computing capability levels;
second corresponding relationship information, comprising a corresponding relationship between different storage capability information and different storage capability levels;
third corresponding relationship information, comprising a corresponding relationship between different transmission capability information and different transmission capability levels; and
fourth corresponding relationship information, comprising a corresponding relationship between different energy capability information and different energy capability levels.

21. The method as claimed in any one of claims 14 to 18, wherein the available resource information has at least two types carried in a same type of signaling; and/or
the available resource information has at least two types carried in different types of signaling.

22. The method as claimed in any one of claims 13 to 18, wherein the available resource information is carried in at least one of:
a radio resource control (RRC) message, uplink control information (UCI), information carried in a physical uplink control channel (PUCCH), and information carried in a physical uplink shared channel (PUSCH); or
system information, a system information block (SIB), a RRC message, a medium access control-control element (MAC-CE), downlink control information (DCI), information carried in a physical downlink control channel (PDCCH), and information carried in a physical downlink shared channel (PDCCH).

23. The method as claimed in any one of claims 13 to 18, further comprising:
transmitting, by the master node, indication information to the sub-node, the indication information being configured to indicate that the sub-node is the target sub-node participating in the distributed task.

24. A node determination apparatus for a distributed task, comprising:
a transmission module, configured to transmit available resource information to a master node of a mobile communication system, the available resource information being configured to determine a target sub-node participating in the distributed task.

25. The apparatus as claimed in claim 24, wherein the available resource information comprises at least one of:
computing capability information;
storage capability information;
transmission capability information; and
energy capability information.

26. The apparatus as claimed in claim 25, wherein the computing capability information comprises at least one of:
floating-point computing capability per unit of time;
the number of graphics processing units (GPUs);
a cache capacity of GPUs;
the number of neural network processing units (NPUs);
a cache capacity of NPUs; and
the number of central processing units (CPUs).

27. The apparatus as claimed in claim 25, wherein the storage capability information comprises at least one of:
an available memory capacity;
an available cache capacity; and
an available storage capacity.

28. The apparatus as claimed in claim 25, wherein the transmission capability information comprises at least one of:
a transmission rate;
a transmission delay;
a communication signal strength;
channel quality state information;
a transmission bit error rate;
a transmission information block error rate; and
spectrum efficiency information.

29. The apparatus as claimed in claim 25, wherein the energy capability information comprises at least one of:
residual power;
available power for the distributed task; and
a predicted value of endurance.

30. The apparatus as claimed in any one of claims 24 to 29, further comprising:
a processing module, configured to a determine capability level corresponding to the available resource information according to corresponding relationship information, the corresponding relationship information comprising a corresponding relationship between different available resource information and different capability levels;
wherein the transmission module is configured to transmit the capability level corresponding to the available resource information to the master node.

31. The apparatus as claimed in claim 30, wherein the processing module is configured to:
determine a computing capability level corresponding to the computing capability information according to first corresponding relationship information, in response to the available resource information comprising the computing capability information, the first corresponding relationship information comprising a corresponding relationship between different computing capability information and different computing capability levels;
determine a storage capability level corresponding to the storage capability information according to second corresponding relationship information, in response to the available resource information comprising the storage capability information, the second corresponding relationship information comprising a corresponding relationship between different storage capability information and different storage capability levels;
determine a transmission capability level corresponding to the transmission capability information according to third corresponding relationship information, in response to the available resource information comprising the transmission capability information, the third corresponding relationship information comprising a corresponding relationship between different transmission capability information and different transmission capability levels; and
determine an energy capability level corresponding to the energy capability information according to fourth corresponding relationship information, in response to the available resource information comprising the energy capability information, the fourth corresponding relationship information comprising a corresponding relationship between different energy capability information and different energy capability levels.

32. The apparatus as claimed in claim 30, wherein the corresponding relationship information is predefined in a communication protocol; or
the corresponding relationship information is configured by the master node; or
the corresponding relationship information is configured by a third node, the third node being a node of the mobile communication system that is different from the master node and the sub-node.

33. The apparatus as claimed in any one of claims 25 to 29, wherein the available resource information has at least two types carried in a same type of signaling; and/or
the available resource information has at least two types carried in different types of signaling.

34. The apparatus as claimed in any one of claims 24 to 29, wherein the available resource information is carried in at least one of:
a radio resource control (RRC) message, uplink control information (UCI), information carried in a physical uplink control channel (PUCCH), and information carried in a physical uplink shared channel (PUSCH); or
system information, a system information block (SIB), a RRC message, a medium access control-control element (MAC-CE), downlink control information (DCI), information carried in a physical downlink control channel (PDCCH), and information carried in a physical downlink shared channel (PDCCH).

35. The apparatus as claimed in any one of claims 24 to 29, further comprising:
a receiving module, configured to receive indication information transmitted by the master node;
wherein the indication information is configured to indicate that the sub-node are the target sub-node participating in the distributed task.

36. A node determination apparatus for a distributed task, comprising:
a receiving module, configured to receive available resource information transmitted by a sub-node of a mobile communication system;
a processing module, configured to determine a target sub-node participating in the distributed task based on the available resource information of the sub-node.

37. The apparatus as claimed in claim 36, wherein the available resource information comprises at least one of:
computing capability information;
storage capability information;
transmission capability information; and
energy capability information.

38. The apparatus as claimed in claim 37, wherein the computing capability information comprises at least one of:
floating-point computing capability per unit of time;
the number of graphics processing units (GPUs);
a cache capacity of GPUs;
the number of neural network processing units (NPUs);
a cache capacity of NPUs; and
the number of central processing units (CPUs).

39. The apparatus as claimed in claim 37, wherein the storage capability information comprises at least one of:
an available memory capacity;
an available cache capacity; and
an available storage capacity.

40. The apparatus as claimed in claim 37, wherein the transmission capability information comprises at least one of:
a transmission rate;
a transmission delay;
a communication signal strength;
channel quality state information;
a transmission bit error rate;
a transmission information block error rate; and
spectrum efficiency information.

41. The apparatus as claimed in claim 37, wherein the energy capability information comprises at least one of:
residual power;
available power for the distributed task; and
a predicted value of endurance.

42. The apparatus as claimed in any one of claims 36 to 41, further comprising:
a transmission module, configured to configure corresponding relationship information to the sub-node, the corresponding relationship information comprising a corresponding relationship between different available resource information and different capability levels.

43. The apparatus as claimed in claim 42, the corresponding relationship information comprises at least one of:
first corresponding relationship information, comprising a corresponding relationship between different computing capability information and different computing capability levels;
second corresponding relationship information, comprising a corresponding relationship between different storage capability information and different storage capability levels;
third corresponding relationship information, comprising a corresponding relationship between different transmission capability information and different transmission capability levels; and
fourth corresponding relationship information, comprising a corresponding relationship between different energy capability information and different energy capability levels.

44. The apparatus as claimed in any one of claims 37 to 41, wherein the available resource information has at least two types carried in a same type of signaling; and/or
the available resource information has at least two types carried in different types of signaling.

45. The apparatus as claimed in any one of claims 36 to 41, wherein the available resource information is carried in at least one of:
a radio resource control (RRC) message, uplink control information (UCI), information carried in a physical uplink control channel (PUCCH), and information carried in a physical uplink shared channel (PUSCH); or
system information, a system information block (SIB), a RRC message, a medium access control-control element (MAC-CE), downlink control information (DCI), information carried in a physical downlink control channel (PDCCH), and information carried in a physical downlink shared channel (PDCCH).

46. The apparatus as claimed in any one of claims 36 to 41, further comprising:
a transmission module, configured to transmit indication information to the sub-node, the indication information being configured to indicate that the sub-node is the target sub-nodes participating in the distributed task.

47. A communication device, comprising:
a processor;
a transceiver connected to the processor; and
a memory, configured to store executable instructions of the processor;
wherein the processor is configured to load and execute the executable instructions to implement a node determination method for a distributed task as claimed in any one of claims 1 to 23.

48. A computer-readable storage medium, storing executable instructions loaded and executed by a processor to implement a node determination method for a distributed task as claimed in any one of claims 1 to 23.
